# EUROPEAN PATENT SPECIFICATION

(11) **EP 2 699 034 B1**
(45) Date of publication and mention of the grant of the patent: **10.07.2019**
(21) Application number: 12781615.5
(22) Date of filing: 14.05.2012
(51) Int. Cl.: H04W 72/08, H04W 24/02, H04B 7/26, H04W 72/04, H04J 11/00, H04W 16/10, H04W 16/32

(54) **CONFIGURATION OF A WIRELESS NETWORK**
KONFIGURATION EINES DRAHTLOSEN NETZWERKS
CONFIGURATION D'UN RÉSEAU SANS FIL

(30) Priority: 12.05.2011 CN 201110122632
(43) Date of publication of application: 19.02.2014
(73) Proprietor: Huawei Technologies Co., Ltd., Longgang District Shenzhen, Guangdong 518129 (CN)
(72) Inventor: YU, Yinghui, Shenzhen Guangdong 518129 (CN)
(74) Representative: Thun, Clemens
(86) International application number: PCT/CN2012/075452
(87) International publication number: WO 2012/152229

(56) References cited:
- WO-A1-01/99454
- WO-A1-2010/099485
- WO-A1-2011/039935
- WO-A1-2013/100581
- CN-A- 101 827 445
- CN-A- 102 036 295
- CN-A- 102 036 296

## Description

### TECHNICAL FIELD

Embodiments of the present invention relate to the field of communication technologies, and in particular, to a method, an apparatus, and a system for configuring a radio network.

### BACKGROUND

In a time division (Time Division, TD) system, different uplink/downlink traffic requirements may be supported by using different uplink/downlink timeslot configurations. TD long term evolution (TD Long Term Evolution, TD-LTE) is a radio communication standard applied in mobile high broadband. Time division duplex (Time Division Duplex, TDD) uplink/downlink configurations in the TD-LTE system include multiple different uplink/downlink configurations, which can meet service requirements of multiple different uplink/downlink ratios. This is an important advantage of the TDD as compared with frequency division duplex (Frequency Division Duplex, FDD).

For example, WO 2010/099485A1 refers to systems and methodologies that facilitate establishing synchronization and/or mitigating interference with a time division duplexing (TDD) access point base station in a wireless communication environment. For example, a TDD configuration can be selected for the access point base station based upon received information to control interference. By way of another example, the access point base station can be synchronized with a disparate base station based upon the received information. Moreover, the received information can relate to the disparate base station, a served user equipment (UE) (e.g., served by the access point base station,...), and/or a non-served UE (e.g., served by a base station other than the access point base station,...). For example, the served UE can transmit a measurement related to the disparate base station to the access point base station.

However, in an inter-frequency or intra-frequency TDD system, if neighboring cells use different uplink/downlink configurations, serious uplink/downlink interference occurs in timeslots of different uplink/downlink configurations (namely, incompatible timeslots).

### SUMMARY

The present invention provides a method, an apparatus, and a system for configuring a radio network, to overcome the defect of serious interference between different uplink/downlink configurations in the prior art and reduce interference between different uplink/downlink configurations.

The invention is defined in the appended set of claims.

In a first aspect a method for configuring a radio network performed by an upper layer cell is provided, the method comprising:
receiving, from an isolated cell in an isolated cell cluster, an uplink/downlink configuration that needs to be changed, wherein the isolated cell cluster comprises one or more cells providing local continuous coverage and the upper layer cell is associated to the isolated cell cluster;
determining, according to an uplink/downlink configuration currently used by the isolated cell and the uplink/downlink configuration that needs to be changed, an uplink/downlink configuration to be used by the isolated cell, and performing interference control for the isolated cell; and
returning, the uplink/downlink configuration to be used by the isolated cell to the isolated cell.

In a second aspect a method for configuring a radio network performed by an isolated cell in an isolated cell cluster is provided, the method comprising:
determining, according to a current uplink/downlink service requirement, an uplink/downlink configuration that needs to be changed, and sending, to an associated upper-layer cell of the isolated cell cluster to which the isolated cell belongs, the uplink/downlink configuration that needs to be changed by the isolated cell, wherein the isolated cell cluster comprises one or more cells providing local continuous coverage; and
performing an uplink/downlink service configuration of the isolated cell according to an uplink/downlink configuration that is returned by the associated upper-layer cell and to be used by the isolated cell.

In a third aspect an upper layer cell is provided configured to perform the method according to the first aspect.

In a fourth aspect an isolated cell is provided configured to perform the method of the second aspect.

By using the method, apparatus, and system for configuring a radio network in the present invention, after receiving a time division multiplexing configuration change request, an associated upper-layer cell may, according to an uplink/downlink configuration currently used by an isolated cell and an uplink/downlink configuration that needs to be changed, determine how to change an uplink/downlink configuration of the isolated cell, and perform interference control for the isolated cell, which may reduce interference between different uplink/downlink configurations and implement interference coexistence between cells of different configurations, so that the uplink/downlink configuration of the isolated cell is more reasonable and meets different uplink/downlink traffic requirements.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1a is a schematic diagram of an isolated cell cluster in a heterogeneous network architecture in a TDD mode or an FDD+TDD mode according to an embodiment of the present invention;
FIG. 1b is a schematic diagram of a non-isolated cell cluster in a heterogeneous network architecture in a TDD mode or an FDD+TDD mode according to an embodiment of the present invention;
FIG. 1c is a flowchart of a method for configuring a radio network according to an embodiment of the present invention;
FIG. 2 is a flowchart of a method for configuring a radio network according to another embodiment of the present invention;
FIG. 3 is a flowchart of a method for configuring a radio network according to another embodiment of the present invention;
FIG. 4a is a signaling flowchart of configuration management in a method for configuring a radio network according to another embodiment of the present invention;
FIG. 4b is a signaling flowchart of uplink/downlink configuration updating in a method for configuring a radio network according to another embodiment of the present invention;
FIG. 4c is a schematic diagram of uplink/downlink configurations of an associated macro cell and an isolated cell in a method for configuring a radio network according to another embodiment of the present invention;
FIG. 4d is a schematic diagram where an associated macro cell is an FDD cell and a corresponding isolated cell meets a TDD compatible configuration at an FDD UL band in a method for configuring a radio network according to another embodiment of the present invention;
FIG. 4e is a schematic diagram where an associated macro cell is an FDD cell and a corresponding isolated cell does not meet a TDD compatible configuration at an FDD UL band in a method for configuring a radio network according to another embodiment of the present invention;
FIG. 5 is a schematic diagram of an apparatus for configuring a radio network according to an example;
FIG. 6 is a schematic diagram of an apparatus for configuring a radio network according to another example;
FIG. 7 is a schematic diagram of an apparatus for configuring a radio network according to another example;
FIG. 8 is a schematic diagram of an apparatus for configuring a radio network according to another example;
FIG. 9 is a schematic diagram of an apparatus for configuring a radio network according to another example; and
FIG. 10 is a schematic diagram of a system for configuring a radio network according to another example.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Table 1 shows time division duplex (Time Division Duplexing, TDD) uplink/downlink configurations in a TD long term evolution (TD Long Term Evolution, TD-LTE) system.

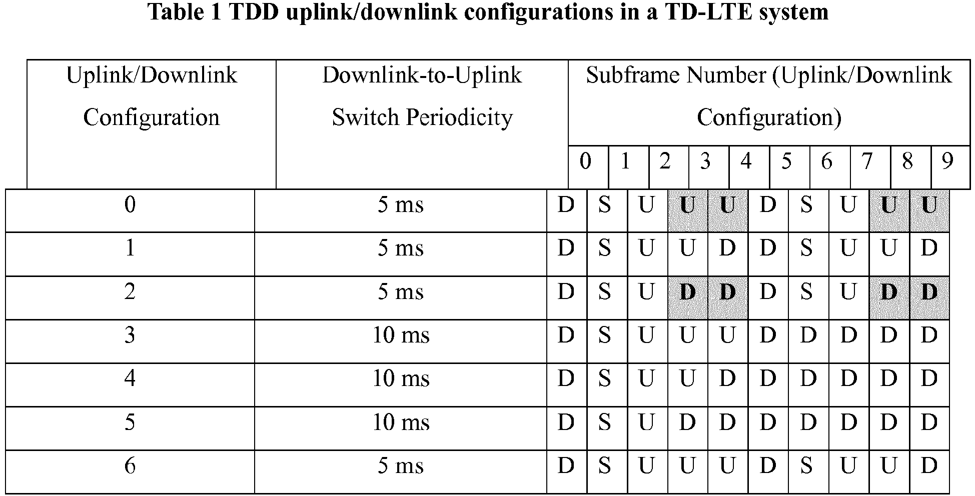

Table 1 includes seven different uplink/downlink configurations, which can meet service requirements of seven different uplink/downlink ratios. For example, it is assumed that: the TDD uplink/downlink configuration of band A is DL:UL = 2:3 (configuration 0), the TDD uplink/downlink configuration of band B is DL:UL = 3:2 (configuration_1), and the TDD uplink/downlink configuration of band C is DL:UL = 4:1 (configuration_2). In an area where a large number of uplink service resources are required, band A may be used for deployment; in an area where a large number of downlink service resources are required, band C may be used for deployment; in an area where the uplink and downlink are basically balanced and a large number of downlink service resources are required, band B may be used for deployment.

In an inter-frequency or intra-frequency TDD system, if neighboring cells use different uplink/downlink configurations, serious uplink/downlink interference occurs in timeslots of different uplink/downlink configurations (namely, incompatible timeslots). For example, for inter-frequency or intra-frequency neighboring cell_1 and cell_2, cell_1 uses configuration "0" in Table 1, and cell_2 uses configuration "2" in Table 1; as shown in Table 1, in subframes (timeslots) "3, 4, 8, and 9" of inconsistent uplink/downlink configurations, serious uplink/downlink interference exists between cell_1 and cell_2. Although entire network synchronization is used in deployment of the TDD system, and entire network configuration consistency is ensured, which can solve the uplink/downlink interference problem of the TDD system simply and effectively, the TDD system loses the advantage of flexibly configuring uplink/downlink resources to meet different uplink/downlink traffic requirements.

The main idea of the embodiments of the present invention is: according to an uplink/downlink configuration currently used by an isolated cell in an isolated cell cluster and an uplink/downlink configuration that needs to be changed, determining how to change an uplink/downlink configuration of the isolated cell; performing interference control for the isolated cell; and implementing interference coexistence of cells of different uplink/downlink configurations, so that the uplink/downlink configuration of the isolated cell is more reasonable and meets different uplink/downlink traffic requirements.

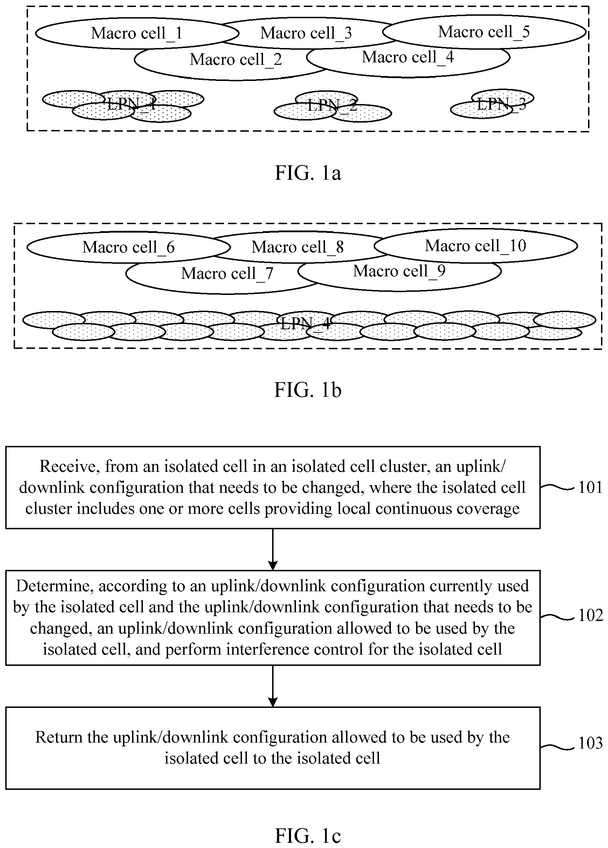

FIG. 1a is a schematic diagram of an isolated cell cluster (Isolated Cells) in a heterogeneous network architecture in a TDD mode or an FDD+TDD mode according to an embodiment of the present invention. FIG. 1b is a schematic diagram of a non-isolated cell cluster in a heterogeneous network architecture in a TDD mode or an FDD+TDD mode according to an embodiment of the present invention. In an intra-frequency heterogeneous network in the TDD mode, cells at layer 1 and layer 2 are TDD cells of a same frequency; in an FDD+TDD heterogeneous network, the FDD downlink (DL) and the FDD uplink (UL) form coverage of layer 1; the FDD uplink (UL) provides layer 2 coverage in the TDD mode, for example, low power node (low power Node, LPN) coverage. Layer 1 is used to provide wide coverage of the network; if layer 1 is a coverage layer where TDD cells are deployed, the uplink/downlink configuration of TDD cells needs to be performed for the coverage layer according to uplink/downlink traffic of services in the coverage area. Layer 2 is mainly used to provide extra network capacity to meet the capacity requirement of a specific area. Because the coverage areas of layer 2 are different, uplink/downlink traffic requirements of different areas may be different, and different uplink/downlink configuration requirements may arise. In addition, because cells of layer 2 are mainly used to improve capacity, the main forms of the cells are LPNs. The coverage mode of layer 2 has two types: FIG. 1a shows a discontinuous coverage mode, and FIG. 1b shows a continuous coverage mode. In actual network deployment, most heterogeneous networks use the discontinuous coverage mode shown in FIG. 1a. In the case of discontinuous coverage, according to the coverage of one or more LPNs providing continuous coverage at layer 2, using a macro cell in the embodiment of the present invention as an example for description, for example, according to the number of immediately neighboring upper-layer cells, namely, associated upper-layer cells, one or more cells providing local continuous coverage may be determined as an isolated cell cluster or a non-isolated cell cluster, where the upper-layer cell of a micro cell is a macro cell, and the upper-layer cell of a pico cell is a micro cell or a macro cell. If the number of macro cells immediately neighboring to the one or more cells providing local continuous coverage is smaller than the set number N (usually the value of N may be 2-3, or other values, and no great value is selected, so that interference control is performed), it is considered that the one or more cells providing local continuous coverage are an isolated cell cluster; otherwise, if the number of macro cells immediately neighboring to the one or more cells providing local continuous coverage is greater than N (such as 30), the one or more cells are a non-isolated cell cluster, and the upper-layer cell immediately neighboring to the isolated cell cluster is an associated upper-layer cell of the isolated cell cluster.

A network-side management node in the embodiment of the present invention, for example, an OAM, a radio resource management (Radio resource management, RRM), a radio environment map (Radio environment Map, REM), a core network (Core network, CN), or a radio access node (Radio access Node, RAN), may identify the network deployment range of cells that require different uplink/downlink configurations, that is, whether one or several cells are an isolated cell cluster, where the deployment range may be an area causing interference due to different uplink/downlink configurations. A cell providing local coverage may be identified through the configuration of the network-side management node such as an operation, administration and maintenance device (Operation Administration and Maintenance, OAM). For example, the OAM may reflect network deployment of an operator; according to the deployment range relationship of different cell network coverage, it may be determined whether a cell belongs to an isolated cell cluster or a non-isolated cell cluster. If the cell belongs to an isolated cell cluster, different uplink/downlink configurations may be performed, and the cell needs to perform resource coordination management with cells in the areas that the cell affects, and perform interference avoidance or interference elimination; if the cell belongs to a non-isolated cell cluster, the network side may consider whether to modify the uplink/downlink configuration of the whole network according to the service requirement ratio of the network side, and how to modify the uplink/downlink configuration to avoid interference.

FIG. 1c is a flowchart of a method for configuring a radio network according to an embodiment of the present invention. As shown in FIG. 1c, the method for configuring a radio network may include the following:
101. Receive, from an isolated cell in an isolated cell cluster, an uplink/downlink configuration that needs to be changed, where the isolated cell cluster includes one or more cells providing local continuous coverage.
102. Determine, according to an uplink/downlink configuration currently used by the isolated cell and the uplink/downlink configuration that needs to be changed, an uplink/downlink configuration allowed to be used by the isolated cell, and perform interference control for the isolated cell.
103. Return the uplink/downlink configuration allowed to be used by the isolated cell to the isolated cell.

For the definition of the isolated cell cluster, isolated cell, and associated upper-layer cell, reference may be made to FIG. 1a, FIG. 1b, and related descriptions.

In this embodiment, after an associated upper-layer cell receives, from an isolated cell in an isolated cell cluster, an uplink/downlink configuration that needs to be changed, the associated upper-layer cell may, according to an uplink/downlink configuration currently used by the isolated cell and the uplink/downlink configuration that needs to be changed, determine how to change the uplink/downlink configuration of the isolated cell, and perform interference control for the isolated cell, which may reduce interference between different uplink/downlink configurations and implement interference coexistence between cells of different uplink/downlink configurations, so that the uplink/downlink configuration of the isolated cell is more reasonable and meets different uplink/downlink traffic requirements.

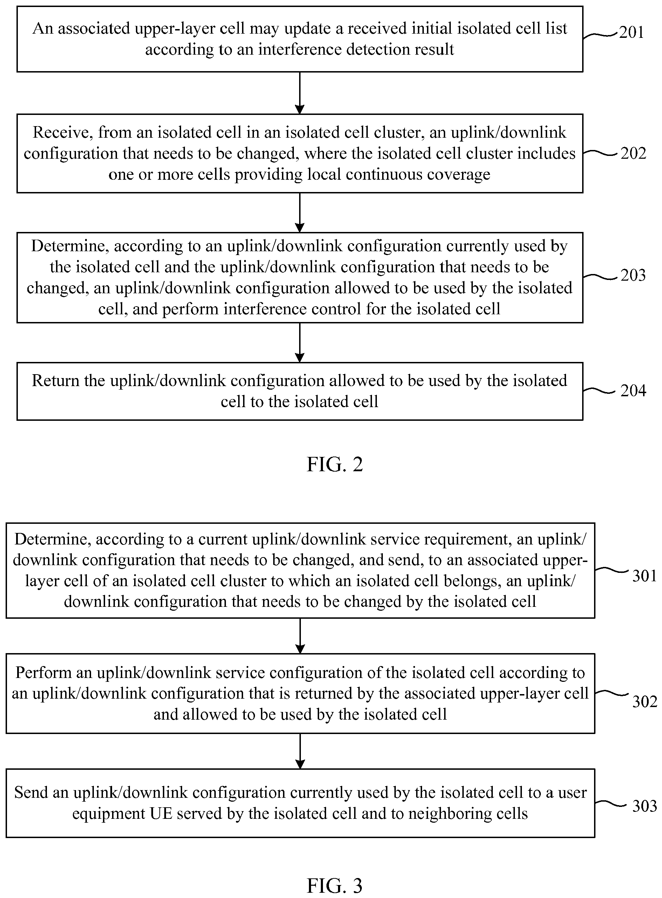

FIG. 2 is a flowchart of a method for configuring a radio network according to another embodiment of the present invention. As shown in FIG. 2, the method for configuring a radio network may include the following:
201. An associated upper-layer cell may update a received initial isolated cell list according to an interference detection result, which may specifically include:
   obtaining and storing configuration information of an isolated cell cluster within the coverage of the associated upper-layer cell, where a network-side management node may send its stored configuration information of each isolated cell cluster within the coverage of an associated upper-layer cell to the associated upper-layer cell, where configuration information of an isolated cell cluster may generally include: a list of LPNs in the isolated cell cluster, namely, an isolated cell list. In addition, the configuration information of the isolated cell cluster may further include: "isolated cell indication", indicating whether a cell is an isolated cell; of course, a cell may also be preset as an isolated cell or not, and thereby, it is unnecessary to carry "isolated cell indication". In addition, the configuration information of the isolated cell cluster may further include an associated upper-layer cell list; therefore, the method for configuring a radio network may further include:
   determining, according to the isolated cell indication, whether a cell is an isolated cell; and/or
   determining, according to the associated upper-layer cell list, an associated upper-layer cell immediately neighboring to a cell.

   The network-side management node may be an OAM, an RRM, an REM, a CN, or an RAN, or the like.
   Optionally, the associated upper-layer cell may start interference detection for each isolated cell of the isolated cell cluster; and if an interference detection result of one isolated cell is lower than a set threshold, delete the isolated cell from the isolated cell list corresponding to the isolated cell cluster; or if an interference detection result of one isolated cell is higher than a set threshold, store the isolated cell into the isolated cell list corresponding to the isolated cell cluster. Then, optionally, the associated upper-layer cell may notify configuration update information of the isolated cell cluster to the isolated cell, so that the isolated cell learns that the isolated cell itself does not cause interference to the associated upper-layer cell, where the configuration update information of the isolated cell cluster may be either information of a specifically added or deleted isolated cell or an updated isolated cell list. In addition, optionally, the associated upper-layer cell may send the configuration update information of the isolated cell cluster to the network-side management node, so that the network-side management node can perform subsequent configuration management conveniently.
202. Receive, from an isolated cell in an isolated cell cluster, an uplink/downlink configuration that needs to be changed, where the isolated cell cluster includes one or more cells providing local continuous coverage.
203. Determine, according to an uplink/downlink configuration currently used by the isolated cell and the uplink/downlink configuration that needs to be changed, an uplink/downlink configuration allowed to be used by the isolated cell, and perform interference control for the isolated cell.

The interference control performed in step 203 may specifically include the following two modes:
Mode 1: determining, according to the uplink/downlink configuration currently used by the isolated cell, the uplink/downlink configuration that needs to be changed, and resources of the associated upper-layer cell, the uplink/downlink configuration allowed to be used by the isolated cell, and performing interference avoidance according to the uplink/downlink configuration currently used by the isolated cell and the uplink/downlink configuration allowed to be used by the isolated cell:
   where, determining, according to the uplink/downlink configuration currently used by the isolated cell, the uplink/downlink configuration that needs to be changed, and resources of the associated upper-layer cell, the uplink/downlink configuration allowed to be used by the isolated cell, may specifically include:
   if resources of the associated upper-layer cell fully support the uplink/downlink configuration that needs to be changed, allowing the uplink/downlink configuration used by the isolated cell to be changed into the uplink/downlink configuration that needs to be changed; or
   if resources of the associated upper-layer cell partially support the uplink/downlink configuration that needs to be changed, selecting, according to the uplink/downlink configuration that needs to be changed and resources of the associated upper-layer cell, the uplink/downlink configuration allowed to be used by the isolated cell; or
   if resources of the associated upper-layer cell do not support the uplink/downlink configuration that needs to be changed, allowing the uplink/downlink configuration used by the isolated cell to be kept as the uplink/downlink configuration currently used by the isolated cell.

   Then, performing interference avoidance according to the uplink/downlink configuration currently used by the isolated cell and the uplink/downlink configuration allowed to be used by the isolated cell, may specifically include:
   if the associated upper-layer cell is a time division duplex cell, comparing positions of incompatible subframes in the uplink/downlink configuration allowed to be used by the isolated cell and in the uplink/downlink configuration currently used by the isolated cell, and blanking the incompatible subframes; or
   if the associated upper-layer cell is a frequency division duplex cell, comparing the uplink/downlink configuration allowed to be used by the isolated cell and the uplink/downlink configuration currently used by the isolated cell; if the number of downlink subframes in the uplink/downlink configuration allowed to be used by the isolated cell increases, determining, by the associated upper-layer cell according to uplink traffic, whether there are idle uplink subframes that may be blanked and used as downlink subframes of a time division duplex cell, and if so, determining, according to the number of idle uplink subframes, the number of downlink subframes allowed to be added; and if the number of uplink subframes in the uplink/downlink configuration allowed to be used by the isolated cell increases, allowing the isolated cell to change the uplink/downlink configuration.
Mode 2: determining an uplink/downlink control channel that needs to be changed as the uplink/downlink configuration allowed to be used by the isolated cell, obtaining configuration information of the uplink/downlink control channel that needs to be changed by the isolated cell, and performing interference elimination according to the uplink/downlink configuration currently used by the isolated cell, the uplink/downlink configuration that needs to be changed, and the configuration information of the uplink/downlink control channel that needs to be changed, which may specifically include:
   if the associated upper-layer cell is a time division duplex cell, identifying, by a receiver of the associated upper-layer cell, a signal of an uplink control channel of a user equipment UE in the isolated cell, where the signal of the uplink control channel comes from an incompatible subframe position in the uplink/downlink configuration, and subtracting the signal of the uplink control channel of the UE in the isolated cell from a received resultant signal to obtain a wanted signal from a UE in the associated upper-layer cell; or, identifying, by a receiver of a UE in the associated upper-layer cell, a signal of a downlink control channel of the isolated cell, where the signal of the downlink control channel comes from an incompatible subframe position in the uplink/downlink configuration, and subtracting the signal of the downlink control channel of the isolated cell from a received resultant signal to obtain a wanted signal from the associated upper-layer cell; or
   if the associated upper-layer cell is a frequency division duplex cell, identifying, by a receiver of the associated upper-layer cell, in an uplink subframe position of the isolated cell, a signal of an uplink control channel of a UE in the isolated cell, where the signal of uplink control channel comes from an incompatible subframe position in the uplink/downlink configuration, and subtracting the signal of the uplink control channel of the UE in the isolated cell from a received resultant signal to obtain a wanted signal from a UE in the associated upper-layer cell; or, identifying, by a receiver of a UE in the associated upper-layer cell, in a downlink subframe position of the isolated cell, a signal of a downlink control channel of the isolated cell, where the signal of the downlink control channel comes from an incompatible subframe position in the uplink/downlink configuration, and subtracting the signal of the downlink control channel of the isolated cell from a received resultant signal to obtain a wanted signal from the associated macro cell;
   where the incompatible subframe position in the uplink/downlink configuration is determined by the uplink/downlink configuration currently used by the isolated cell and the uplink/downlink configuration that needs to be changed, and identifying, by the associated upper-layer cell, the incompatible subframe position in the uplink/downlink configuration, may specifically include the following cases:
      if the associated upper-layer cell is a time division duplex cell, the incompatible subframe position in the uplink/downlink configuration is a subframe position with different uplink/downlink configurations in the uplink/downlink configuration that needs to be changed and in the uplink/downlink configuration currently used; and
      if the associated upper-layer cell is a frequency division duplex cell, the incompatible subframe position in the uplink/downlink configuration is a subframe position with different uplink/downlink configurations in the uplink/downlink configuration that needs to be changed and in the configuration currently used by the FDD cell.
204. Return the uplink/downlink configuration allowed to be used by the isolated cell to the isolated cell.

Then, the isolated cell may perform an uplink/downlink service configuration according to the specific configuration mode corresponding to the uplink/downlink configuration and returned by the associated upper-layer cell.

To solve the problem of uplink/downlink interference in the TDD system, a method for reducing interference in the prior art is as follows: In the case of rich spectrum resources, different uplink/downlink configurations may be deployed on different bands, and different bands are deployed in different areas, thereby meeting different uplink/downlink service requirements of different areas. In addition, different bands may be combined to meet different uplink/downlink traffic requirements of the network. The solution of different TDD configurations is implemented by combining frequency domains; because spectrum spacing between different bands is great, different TDD uplink/downlink configurations of different bands do not cause interference. However, network deployment using the solution requires many spectrum resources, and requires resources of multiple bands; if there is only one band, the network cannot work. In comparison, the embodiment of the present invention is implemented on a single band, and a few spectrum resources are occupied.

Another method for reducing interference in the prior art is as follows: A subframe (timeslot) having interference has a low priority in scheduling, and preferably is not scheduled, or is scheduled in the case of weak interference. This method needs to detect interference in subframes of different configurations, and perform interference avoidance in scheduling according to the interference. However, the process of performing interference detection for a specific timeslot and subframe and performing scheduling based on the detection result is a dynamic detection and scheduling process, which requires frequent detection and signaling support, and the actual application is complex. If data scheduling is not performed in subframes of different configurations, interference detection in the subframes may not be performed. To meet different uplink/downlink traffic requirements in a pico cell, scheduling may not be performed in some subframes of cells within a wide range. This has a great impact on the throughput of the network, and the implementation cost is high. In comparison, in the embodiment of the present invention, scheduling priorities do not need to be set, and not scheduling subframes in a wide range is not caused. Therefore, the throughput of the network is not affected, and the implementation cost is low; it is only necessary to perform interference control for the isolated cell instead of all subframes, and therefore, interference control is simple.

In this embodiment, after an associated upper-layer cell receives a time division multiplexing configuration change request sent by an isolated cell in an isolated cell cluster, the associated upper-layer cell may, according to an uplink/downlink configuration currently used by the isolated cell and an uplink/downlink configuration that needs to be changed, determine how to change the uplink/downlink configuration of the isolated cell, and perform interference control for the isolated cell, which may reduce interference between different uplink/downlink configurations and implement interference coexistence between cells of different uplink/downlink configurations, so that the uplink/downlink configuration of the isolated cell is more reasonable and meets different uplink/downlink traffic requirements.

FIG. 3 is a flowchart of a method for configuring a radio network according to another embodiment of the present invention. As shown in FIG. 3, the method for configuring a radio network may include the following:
301. Determine, according to a current uplink/downlink service requirement, an uplink/downlink configuration that needs to be changed, and send, to an associated upper-layer cell of an isolated cell cluster to which an isolated cell belongs, an uplink/downlink configuration that needs to be changed by the isolated cell, where the isolated cell cluster includes one or more cells providing local continuous coverage.

Before step 301, each isolated cell may update the stored associated upper-layer cell list, which may specifically include:
obtaining and storing, by the isolated cell, configuration information of the associated upper-layer cell of the isolated cell cluster to which the isolated cell belongs; and specifically, sending, by a network-side management node, the stored configuration information of the associated upper-layer cell of the isolated cell cluster to which the isolated cell belongs to the isolated cell, where the configuration information of the associated upper-layer cell which is received by the isolated cell may include an initial associated upper-layer cell list, and the network-side management node may be an OAM, an RRM, an REM, a CN, or an RAN.

Then, the isolated cell may start interference detection for each associated upper-layer cell of the isolated cell cluster to which the isolated cell belongs; if an interference detection result of one associated upper-layer cell is higher than a set threshold, store the associated upper-layer cell into the initial associated upper-layer cell list; if an interference detection result of one associated upper-layer cell is lower than a set threshold, delete the associated upper-layer cell from the initial associated upper-layer cell list.

Optionally, the configuration information of one associated upper-layer cell which is received by the isolated cell may further include an initial isolated cell list; in this case, the isolated cell may instruct the associated upper-layer cell to update, according to the interference detection result of the isolated cell, an isolated cell list stored by the associated upper-layer cell.

Further, if the isolated cell detects the update of the associated upper-layer cell, the isolated cell sends configuration update information of the associated upper-layer cell to the network-side management node.

After the associated upper-layer cell receives the time division multiplexing configuration change request of the isolated cell, the associated upper-layer cell may perform interference control (including interference avoidance or interference elimination) for the isolated cell, determine how to change the uplink/downlink configuration of the isolated cell, and return the uplink/downlink configuration allowed to be used by the isolated cell to the isolated cell. For details, reference may be made to the related description in the embodiment.

302. Perform an uplink/downlink service configuration of the isolated cell according to an uplink/downlink configuration that is returned by the associated upper-layer cell and allowed to be used by the isolated cell.

Further, the method for configuring a radio network may include the following:
303. Send an uplink/downlink configuration currently used by the isolated cell to a user equipment UE served by the isolated cell and to neighboring cells.

The neighboring cells include the associated upper-layer cell of the isolated cell cluster and other isolated cells than an isolated cell initiating a request in the isolated cell cluster to which the isolated cell belongs. In this way, the associated upper-layer cell of the isolated cell cluster and the other isolated cells in the isolated cell cluster to which the isolated cell belongs can all learn the uplink/downlink configuration currently used by the isolated cell, and thereby can use the uplink/downlink configuration to perform respective uplink/downlink service configurations.

In this embodiment, after an associated upper-layer cell receives a time division multiplexing configuration change request sent by an isolated cell in an isolated cell cluster, the associated upper-layer cell may perform interference control for the isolated cell according to an uplink/downlink configuration currently used by the isolated cell and an uplink/downlink configuration that needs to be changed, and determine how to change the uplink/downlink configuration of the isolated cell, which may reduce interference between different uplink/downlink configurations and implement interference coexistence between cells of different uplink/downlink configurations, so that the uplink/downlink configuration of the isolated cell is more reasonable and meets different uplink/downlink traffic requirements; therefore, a few spectrum resources are occupied and the cost is low.

If it is necessary to perform interference control (including interference avoidance or interference elimination) for the upper-layer cell near the isolated cell at the network side, for example, the isolated cell may be an LPN, and the upper-layer cell may be a macro cell, the network-side management node such as an OAM may send the configuration information of the isolated cell cluster to the macro cell, namely, the associated upper-layer cell, which is immediately neighboring to the isolated cell cluster. As shown in FIG. 1a, macro cells immediately neighboring to the coverage area of the isolated cell cluster LPN_1 are macro cell_1 and macro cell_2, and therefore the OAM may send configuration information of the associated upper-layer cell to the base station of multiple isolated cells of LPN_1, where the configuration information of the associated upper-layer cell may include: a list of macro cells immediately neighboring to the isolated cell cluster, and may further include information such as an isolated cell indication and an isolated cell list. In addition, the OAM may also send configuration information of the isolated cell cluster to the macro cell immediately neighboring to the isolated cell cluster, where the configuration information of the isolated cell cluster may include: an isolated cell indication, an isolated cell list, and so on, and may also include a list of macro cells immediately neighboring to the isolated cell cluster.

After the network-side management node, such as the OAM, RRM, REM, CN, or RAN, obtains the configuration information of the isolated cell cluster and configuration information of the associated upper-layer cell according to the coverage of cells at different layers of the network, the network-side management node may send the configuration information of the isolated cell cluster to the macro cell corresponding to the isolated cell cluster, and send the configuration information of the associated upper-layer cell to each isolated cell in the isolated cell cluster within the coverage of the associated upper-layer cell. Of course, the associated upper-layer cell may also be a non-macro cell, and may be a cell having wider coverage than the isolated cell cluster; the embodiment of the present invention uses an associated macro cell as an example for description. Both the isolated cell and its associated macro cell can update the isolated cell list or macro cell list based on interference detection, where the updated isolated cell list or macro cell list may be sent to the OAM or other network-side management nodes such as the RRM, REM, CN, or RAN.

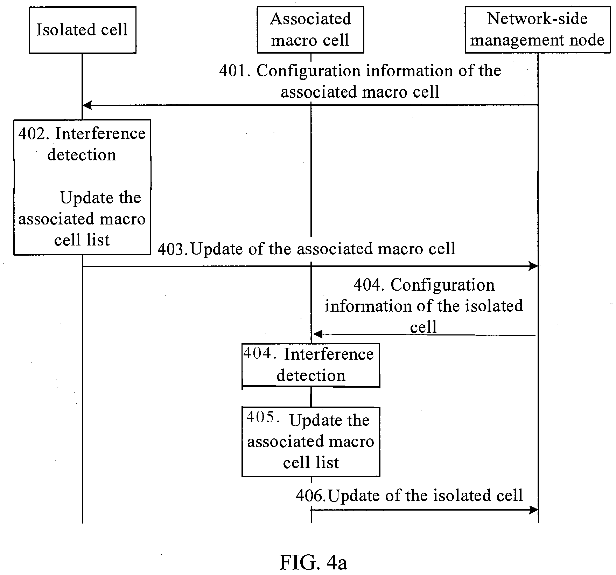

FIG. 4a is a signaling flowchart of configuration management in a method for configuring a radio network according to another embodiment of the present invention. As shown in FIG. 4a, the specific configuration management process of a network side may include the following:
401. After an isolated cell in an isolated cell cluster obtains configuration information of an associated macro cell from a network-side management node, the isolated cell may store the configuration information of the associated macro cell, for example, an associated macro cell list; optionally, the configuration information of the associated macro cell may further include an associated macro cell indication, an isolated cell list, and so on.
402. The isolated cell performs interference detection for the associated macro cell; if the isolated cell detects that an interference value of an associated macro cell is higher than a set threshold, the isolated cell may notify existence of the isolated cell to the associated macro cell, and update the associated macro cell list stored by the isolated cell; otherwise, the isolated cell does not need to notify the associated macro cell.
403. After the isolated cell detects the update of the associated macro cell list, optionally, the isolated cell may send the update of the associated macro cell, for example, an added associated macro cell or an updated associated macro cell list, to the OAM or other network-side management nodes such as an RRM, an REM, a CN, or an RAN.
404. After the associated macro cell obtains the configuration information of the isolated cell cluster from the network side, optionally, the associated macro cell may start interference detection for each isolated cell in the isolated cell cluster.
405. If an interference detection result of an isolated cell is lower than a set threshold, the associated macro cell deletes the isolated cell from the isolated cell list stored by the associated macro cell, and notifies the deletion to the deleted isolated cell.
406. Optionally, the associated macro cell may also send the update of the isolated cell, for example, information of an added isolated cell or an updated isolated cell list, to the OAM or other network-side management nodes such as the RRM, REM, CN, or RAN.

Steps 401-403 are a process of updating the stored associated macro cell list by the isolated cell. Steps 404-406 are a process of updating the stored isolated cell list by the associated macro cell. The two processes have no time sequence relationship. After each isolated cell of the isolated cell cluster completes updating of the associated macro cell list and the associated macro cell completes updating of the isolated cell list, each isolated cell of the isolated cell cluster stores configuration information of the associated macro cell, and the associated macro cell stores configuration information of the isolated cell cluster. If an isolated cell of the isolated cell cluster needs to update its uplink/downlink configuration due to service requirements, the isolated cell may send a time division multiplexing uplink/downlink configuration change request to the associated macro cell of the isolated cell, and the associated macro cell may perform resource management according to the resources of the associated macro cell, thereby avoiding interference caused by the change of the uplink/downlink configuration of the isolated cell to the associated macro cell.

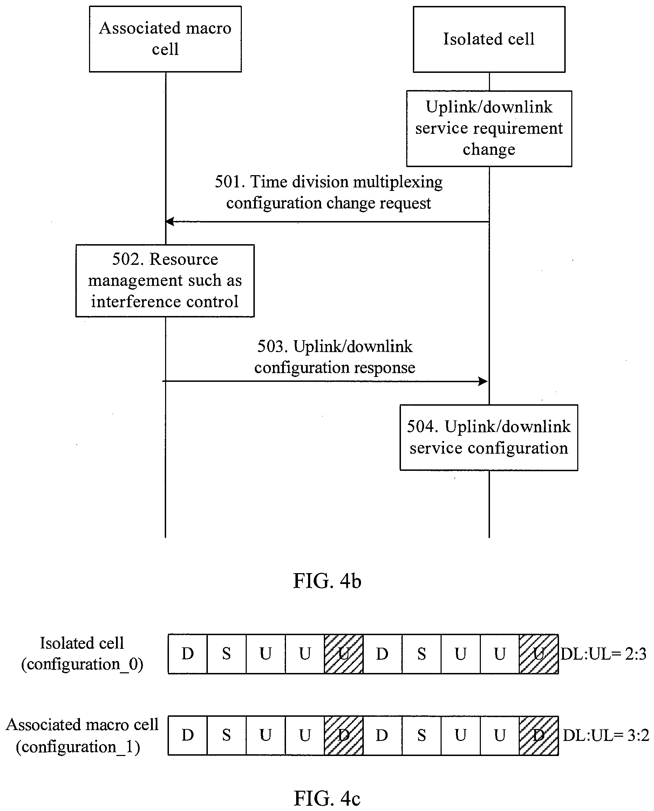

FIG. 4b is a signaling flowchart of uplink/downlink configuration updating in a method for configuring a radio network according to another embodiment of the present invention. As shown in FIG. 4b, the process of uplink/downlink configuration update negotiation between an isolated cell cluster and an associated cell may specifically include the following:
501. If an isolated cell of an isolated cell cluster finds, according to its uplink/downlink service requirement change, that it is necessary to update an uplink/downlink configuration currently used, the isolated cell sends a time division multiplexing configuration change request to an associated macro cell, and indicates, in the time division multiplexing configuration change request, an uplink/downlink configuration that needs to be changed.

The uplink/downlink configuration in the embodiment of the present invention may be any one of the following: a TDD uplink/downlink configuration defined in an LTE system, a TDD uplink/downlink configuration in a Wimax system, a TDD uplink/downlink configuration in a TDS-CDMA, or uplink/downlink configurations of other TDD systems.

Using the TDD uplink/downlink configuration in LTE as an example, an isolated cell cluster is formed by one or more low power node (LPN) cells providing coverage of layer 2; as shown in FIG. 1a, the initial TDD uplink/downlink configuration of the isolated cell cluster is the same as that of the wide coverage cell of layer 1, for example, the TDD uplink/downlink configuration_1 in Table 1 is DL:UL = 3:2 (an S subframe is counted according to a downlink subframe). As a service changes, the uplink/downlink service configuration of the isolated cell may need to change; if the uplink service within the coverage area of the isolated cell increases, the isolated cell sends a time division multiplexing configuration change request, requesting to change to the TDD uplink/downlink configuration_0, namely, DL:UL = 2:3 (an S subframe is counted according to a downlink subframe). In this case, the time division multiplexing configuration change request carries a TDD uplink/downlink configuration that needs to be changed, which may be the index value "0" of configuration_0; or the specific TDD uplink/downlink configuration mode "DSUUUDSUUU" or "1100011000" of configuration_0 may be directly provided, where "1" indicates a downlink subframe and "0" indicates an uplink subframe, or "0011100111", where "0" indicates a downlink subframe and "1" indicates an uplink subframe. Optionally, the time division multiplexing configuration change request may also carry the TDD uplink/downlink configuration information before the change, such as the index value "2" of configuration 2; or directly carry the specific TDD uplink/downlink configuration mode "DSUDDDSUDD" or "1101111011" of configuration_2, where "1" indicates a downlink subframe and "0" indicates an uplink subframe, or "0011100111", where "0" indicates a downlink subframe and "1" indicates an uplink subframe.

502. The associated macro cell may perform resource management according to the uplink/downlink configuration that needs to be changed by the isolated cell, the uplink/downlink configuration currently used, and resources of the associated macro cell, where the resource management mainly includes performing interference control, and determining whether the uplink/downlink configuration is allowed to be changed, thereby avoiding interference caused by the change of the uplink/downlink configuration of the isolated cell cluster to the associated macro cell.

FIG. 4c is a schematic diagram of uplink/downlink configurations of an associated macro cell and an isolated cell in a method for configuring a radio network according to another embodiment of the present invention. Using the configuration mode in FIG. 4c as an example, interference control may include interference avoidance and interference elimination. Assuming that the type of associated macro cell may include time division duplex cell or frequency division duplex cell, the interference control specifically includes the following modes:
Mode 1: Perform interference avoidance according to the received uplink/downlink configuration.
   If the associated macro cell is a time division duplex cell, the associated macro cell first compares positions of incompatible subframes in the uplink/downlink configuration that the isolated cell requests to change and the uplink/downlink configuration of the associated macro cell. For example, when the TDD uplink/downlink configuration in the associated macro cell is configuration_1, if the isolated cell requests to change the configuration to configuration_0, then in each radio frame, configurations of two subframes in the associated macro cell are incompatible. For configurations of the two incompatible subframes, the associated macro cell may use the method: The associated macro cell blanks the incompatible subframes, that is, does not send any signaling or data in the incompatible subframes. Configurations of the blank subframes may be notified by the associated macro cell to the UE served by the associated macro cell and to other macro cells neighboring to the associated macro cell. The notification may optimize the cell identification and measurement performed by a UE in the macro cell or a UE in a neighboring cell. The associated macro cell cancels resource scheduling in the incompatible subframes. In this case, signals which are not based on scheduling may continue to be sent. Sending of scheduling-based information, including signaling and data, may be cancelled. The associated macro cell may further perform resource scheduling for only a user equipment UE whose signal quality of the isolated cell measured in an incompatible subframe is lower than a set threshold. The associated macro cell does not perform resource scheduling of an incompatible subframe for a user equipment UE whose signal quality of the isolated cell measured in the incompatible subframe is higher than the set threshold. The purpose is to reduce interference caused by the incompatible configuration of the isolated cell. If the resources of the associated macro cell cannot be coordinated to meet the uplink/downlink configuration update of the isolated cell, the associated macro cell may change, according to resources of the associated macro cell, the uplink/downlink configuration requested by the isolated cell, for example, although the isolated cell requests to change the configuration to configuration_2, the configuration is changed to configuration_1.
   If the associated macro cell is a frequency division duplex cell, the associated macro cell first compares the uplink/downlink configuration that needs to be changed by the isolated cell and the uplink/downlink configuration currently used by the isolated cell, and determines the changes of the number of subframes. For example, the processing of the FDD associated macro cell may include: if the number of downlink subframes in the uplink/downlink configuration that needs to be changed by the isolated cell increases, for example, when the configuration of the isolated cell is requested to be changed from configuration_0 to configuration_2, four uplink subframes need to be changed to downlink subframes, that is, the number of downlink subframes in the uplink/downlink configuration increases. The FDD associated macro cell counts uplink traffic, and determines whether a part of uplink subframes may be spared to avoid interference caused by uplink transmission in the uplink subframes by the isolated cell. If a part of uplink subframes may be spared, the associated macro cell may spare, according to the positions of the downlink subframes in the uplink/downlink configuration that the isolated cell requests to update, uplink subframes (such as four subframes) corresponding to the positions; if the FDD associated macro cell cannot spare the uplink subframes in the corresponding positions (for example, can spare only two uplink subframes), the FDD associated macro cell may change, according to its own resources, the uplink/downlink configuration requested by the isolated cell (for example, configuration_1 is used instead of configuration_2). If the number of uplink subframes in the uplink/downlink configuration that needs to be changed by the isolated cell increases, for example, when the configuration of the isolated cell is requested to be changed from configuration_2 to configuration_0, four downlink subframes need to be changed to uplink subframes. In this case, the FDD associated macro cell may perform uplink resource scheduling in the downlink sub frame positions in the original uplink/downlink configuration of the isolated cell, and the FDD associated macro cell may agree to the uplink/downlink configuration change request of the isolated cell.
Mode 2: Perform interference elimination according to the received uplink/downlink configuration.

When performing interference elimination, in addition to the uplink/downlink configuration that needs to be changed, the isolated cell needs to notify, to the associated macro cell, configuration information of an uplink/downlink control channel that needs to be changed by the isolated cell, so as to support the associated macro cell in interference elimination.

If the associated macro cell is a time division duplex cell, the associated macro cell compares incompatible subframes in the uplink/downlink configuration that needs to be changed and the uplink/downlink configuration of the associated macro cell. The associated macro cell needs to perform interference elimination in the incompatible subframes. Specifically two cases are involved: One case is that a receiver of the associated macro cell identifies a signal from a UE in the isolated cell, and then subtracts the signal of the UE in the isolated cell from a received resultant signal to obtain a wanted signal from a UE in the associated macro cell; the other case is that a receiver of a UE in the associated macro cell identifies a signal from the isolated cell, and then subtracts the signal of the isolated cell from a received resultant signal to obtain a wanted signal from the associated macro cell.

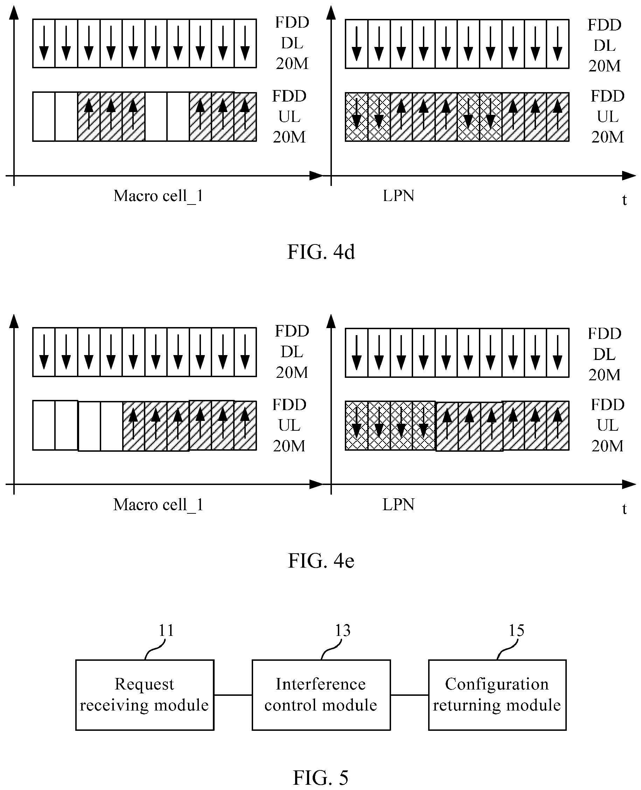

If the associated macro cell is a frequency division duplex cell, the associated macro cell stores the changed uplink/downlink configuration, obtains configuration information of the uplink/downlink control channel corresponding to the changed uplink/downlink configuration, and then performs interference elimination according to the configuration information. FIG. 4d is a schematic diagram where an associated macro cell is an FDD cell and a corresponding isolated cell meets a TDD compatible configuration at an FDD UL band in a method for configuring a radio network according to another embodiment of the present invention. FIG. 4e is a schematic diagram where an associated macro cell is an FDD cell and a corresponding isolated cell does not meet a TDD compatible configuration at an FDD UL band in a method for configuring a radio network according to another embodiment of the present invention, where downlink data is sent in a position corresponding to the isolated cell, in a blank frame of macro cell_1, and the LPN corresponding to macro cell_1 is an isolated cell. The uplink/downlink configurations of macro cell_1 and the corresponding isolated cell LPN in FIG. 4d meet configuration_0 in Table 1, while the uplink/downlink configurations of macro cell_1 and the corresponding isolated cell LPN in FIG. 4e do not meet any configuration in Table 1. First, an incompatible subframe position is identified, and then interference elimination is performed for the incompatible subframe position. Specifically, two cases may be involved: One case is that a receiver of the associated macro cell identifies, in an uplink subframe position of the isolated cell, a signal of a UE in the isolated cell in the incompatible sub frame position in the uplink/downlink configuration, and then subtracts the signal of the UE in the isolated cell from a received resultant signal to obtain a wanted signal from a UE in the associated macro cell; the other case is that a receiver of a UE in the associated macro cell identifies, in a downlink subframe position of the isolated cell, a signal of the isolated cell in the incompatible subframe position in the uplink/downlink configuration, and then subtracts the signal of the isolated cell from a received resultant signal to obtain a wanted signal from the associated macro cell.

503. After completing interference control, the associated macro cell may send an uplink/downlink configuration response to the isolated cell, where the response carries an uplink/downlink configuration allowed to be used by the isolated cell. The uplink/downlink configuration may be the uplink/downlink configuration carried by the isolated cell in the time division multiplexing configuration change request, or may be the uplink/downlink configuration changed by the associated macro cell. The mode of indicating the uplink/downlink configuration may be a configuration X in Table 1, or a specific uplink/downlink configuration mode may be directly provided. Details are given in step 501, and are omitted herein.

504. After receiving the uplink/downlink configuration response of the associated macro cell, the isolated cell performs an uplink/downlink service configuration of the isolated cell according to the uplink/downlink configuration in the response message. After the configuration is completed, the isolated cell sends the updated uplink/downlink configuration to the UE served by the isolated cell and to neighboring cells.

In this embodiment, after an associated upper-layer cell receives a TDD time division multiplexing configuration change request sent by an isolated cell in an isolated cell cluster, the associated upper-layer cell may perform interference control for the isolated cell according to an uplink/downlink configuration currently used by the isolated cell and an uplink/downlink configuration that needs to be changed, and determine how to change the uplink/downlink configuration of the isolated cell, which may reduce interference between different uplink/downlink configurations and implement interference coexistence between cells of different uplink/downlink configurations, so that the uplink/downlink configuration of the isolated cell is more reasonable and meets different uplink/downlink traffic requirements; therefore, a few spectrum resources are occupied and the cost is low.

FIG. 5 is a schematic diagram of an apparatus for configuring a radio network according to an example. As shown in FIG. 5, the apparatus for configuring a radio network includes:
a request receiving module 11, configured to receive, from an isolated cell in an isolated cell cluster, an uplink/downlink configuration that needs to be changed, where the isolated cell cluster includes one or more cells providing local continuous coverage;
an interference control module 13, configured to determine, according to an uplink/downlink configuration currently used by the isolated cell and the uplink/downlink configuration that needs to be changed and is received by the receiving module 11, an uplink/downlink configuration allowed to be used by the isolated cell, and perform interference control for the isolated cell, where the number of associated upper-layer cells immediately neighboring to the isolated cell cluster is smaller than a set threshold; and
a configuration returning module 15, configured to return, to the isolated cell, the uplink/downlink configuration that is allowed to be used by the isolated cell and is determined by the interference control module 13.

For the workflow and working principle of each module in this embodiment, reference may be made to the description in the above method embodiments, and details are not repeated herein.

In this example, after the request receiving module of the associated upper-layer cell receives a time division multiplexing configuration change request sent by an isolated cell in an isolated cell cluster, the interference control module may, according to an uplink/downlink configuration currently used by the isolated cell and an uplink/downlink configuration that needs to be changed, determine how to change the uplink/downlink configuration of the isolated cell, and perform interference control for the isolated cell, which may reduce interference between different uplink/downlink configurations and implement interference coexistence between cells of different uplink/downlink configurations, so that the uplink/downlink configuration of the isolated cell is more reasonable and meets different uplink/downlink traffic requirements; therefore, a few spectrum resources are occupied and the cost is low.

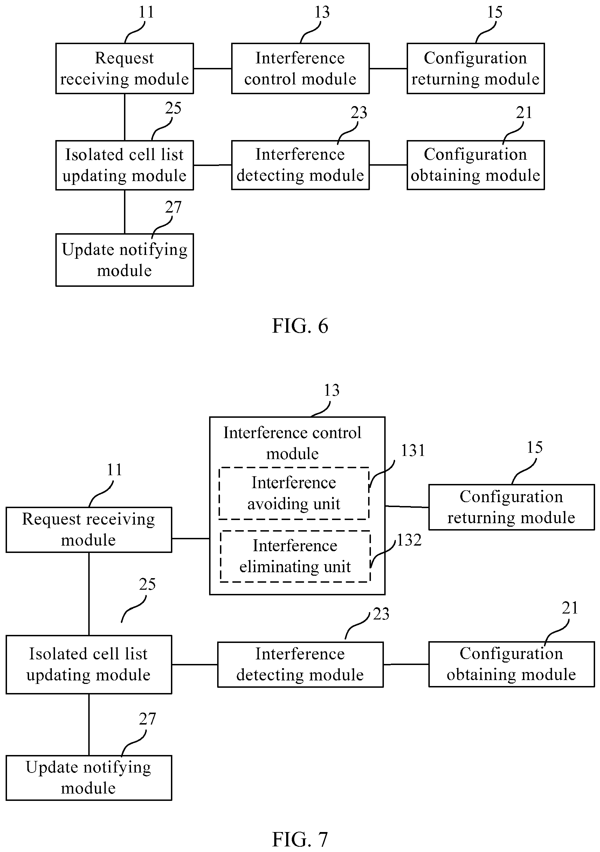

FIG. 6 is a schematic diagram of an apparatus for configuring a radio network according to another example. As shown in FIG. 6, on the basis of the above embodiment, the apparatus for configuring a radio network may further include:
a configuration obtaining module 21, configured to obtain and store configuration information of an isolated cell cluster within coverage of the associated upper-layer cell, where the configuration information of the isolated cell cluster includes an initial isolated cell list in the isolated cell cluster;
an interference detecting module 23, connected to the configuration obtaining module 21 and configured to start interference detection for each isolated cell of the isolated cell cluster; and
an isolated cell list updating module 25, connected to the interference detecting module 23 and configured to: if an interference detection result of one isolated cell is lower than a set threshold, delete the isolated cell from the isolated cell list corresponding to the isolated cell cluster; or if an interference detection result of one isolated cell is higher than a set threshold, store the isolated cell into the isolated cell list corresponding to the isolated cell cluster.

Further, the apparatus for configuring a radio network may include:
an update notifying module 27, connected to the isolated cell list updating module 25 and configured to notify configuration update information of the isolated cell cluster to the isolated cell; and/or send the configuration update information of the isolated cell cluster to a network-side management node.
Further, as shown in FIG. 7 which is a schematic diagram of an apparatus for configuring a radio network according to another example, the interference control module 13 may include:
an interference avoiding unit 131, configured to determine, according to the uplink/downlink configuration currently used by the isolated cell, the uplink/downlink configuration that needs to be changed, and resources of the associated upper-layer cell, the uplink/downlink configuration allowed to be used by the isolated cell, and perform interference avoidance according to the uplink/downlink configuration currently used by the isolated cell and the uplink/downlink configuration allowed to be used by the isolated cell;
where, the interference eliminating unit is specifically configured to: if the associated upper-layer cell is a time division duplex cell, compare positions of incompatible subframes in the uplink/downlink configuration allowed to be used by the isolated cell and the uplink/downlink configuration currently used by the isolated cell, and blank the incompatible subframes; or if the associated upper-layer cell is a frequency division duplex cell, compare the uplink/downlink configuration allowed to be used by the isolated cell and the uplink/downlink configuration currently used by the isolated cell; if the number of downlink subframes in the uplink/downlink configuration allowed to be used by the isolated cell increases, determine, by the associated upper-layer cell according to uplink traffic, whether there are idle uplink subframes that may be blanked and used as downlink subframes of a time division duplex cell, and if so, determine, according to the number of idle uplink subframes, the number of downlink subframes allowed to be added; and if the number of uplink subframes in the uplink/downlink configuration allowed to be used by the isolated cell increases, allow the isolated cell to change the uplink/downlink configuration; and
an interference eliminating unit 132, configured to determine an uplink/downlink control channel that needs to be changed as the uplink/downlink configuration allowed to be used by the isolated cell, obtain configuration information of the uplink/downlink control channel that needs to be changed by the isolated cell, and perform interference elimination according to the uplink/downlink configuration currently used by the isolated cell, the uplink/downlink configuration that needs to be changed, and the configuration information of the uplink/downlink control channel that needs to be changed;
where, the interference canceling unit is specifically configured to: if the associated upper-layer cell is a time division duplex cell, identify, by a receiver of the associated upper-layer cell, a signal of an uplink control channel of a user equipment UE in the isolated cell, where the signal of the uplink control channel comes from an incompatible subframe position in the uplink/downlink configuration, and subtract the signal of the uplink control channel of the UE in the isolated cell from a received resultant signal to obtain a wanted signal from a UE in the associated upper-layer cell; or, identify, by a receiver of a UE in the associated upper-layer cell, a signal of a downlink control channel of the isolated cell, where the signal of the downlink control channel comes from an incompatible subframe position in the uplink/downlink configuration, and subtract the signal of the downlink control channel of the isolated cell from a received resultant signal to obtain a wanted signal from the associated upper-layer cell; or if the associated upper-layer cell is a frequency division duplex cell, identify, by a receiver of the associated upper-layer cell, in an uplink subframe position of the isolated cell, a signal of an uplink control channel of a user equipment UE in the isolated cell, where the signal of the uplink control channel comes from an incompatible subframe position in the uplink/downlink configuration, and subtract the signal of the uplink control channel of the UE in the isolated cell from a received resultant signal to obtain a wanted signal from a UE in the associated upper-layer cell; or, identify, by a receiver of a UE in the associated upper-layer cell, in a downlink subframe position of the isolated cell, a signal of a downlink control channel of the isolated cell, where the signal of the downlink control channel comes from an incompatible subframe position in the uplink/downlink configuration, and subtract the signal of the downlink control channel of the isolated cell from a received resultant signal to obtain a wanted signal from the associated macro cell; where the incompatible subframe position in the uplink/downlink configuration is determined by the uplink/downlink configuration currently used by the isolated cell and the uplink/downlink configuration that needs to be changed.

The interference control module in the example may include an interference canceling unit and an interference avoiding unit, and may also include either of the interference canceling unit and interference avoiding unit.

In this example, after the request receiving module of the associated upper-layer cell receives a time division multiplexing configuration change request sent by an isolated cell in an isolated cell cluster, the interference control module may, according to an uplink/downlink configuration currently used by the isolated cell and an uplink/downlink configuration that needs to be changed, determine how to change the uplink/downlink configuration of the isolated cell, and perform interference control for the isolated cell, which may reduce interference between different uplink/downlink configurations and implement interference coexistence between cells of different uplink/downlink configurations, so that the uplink/downlink configuration of the isolated cell is more reasonable and meets different uplink/downlink traffic requirements; therefore, a few spectrum resources are occupied and the cost is low.

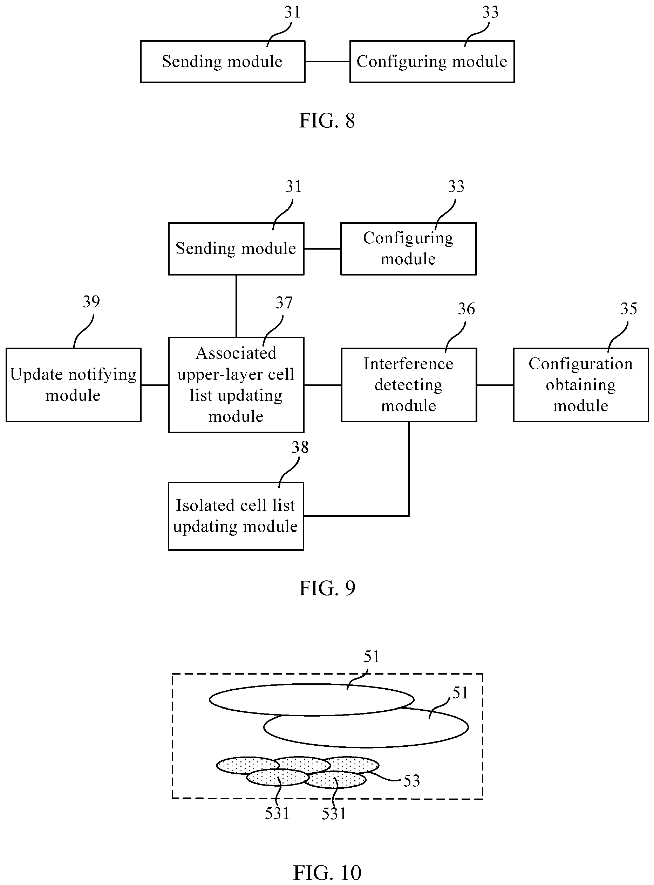

FIG. 8 is a schematic diagram of an apparatus for configuring a radio network according to another example. As shown in FIG. 8, the apparatus for configuring a radio network includes:
a sending module 31, configured to determine, according to a current uplink/downlink service requirement, an uplink/downlink configuration that needs to be changed, and send, to an associated upper-layer cell of an isolated cell cluster to which an isolated cell belongs, an uplink/downlink configuration that needs to be changed by the isolated cell, where the isolated cell cluster includes one or more cells providing local continuous coverage, where the number of associated upper-layer cells immediately neighboring to the isolated cell cluster is smaller than a set threshold; and
a configuring module 33, connected to the sending module 31 and configured to perform an uplink/downlink service configuration of the isolated cell according to an uplink/downlink configuration that is returned by the associated upper-layer cell and allowed to be used by the isolated cell.

For the workflow and working principle of each module in this example, reference may be made to the description in the above method embodiments, and details are not repeated herein.

In this example, after an associated upper-layer cell receives a time division multiplexing configuration change request sent by the sending module of an isolated cell in an isolated cell cluster, the associated upper-layer cell may, according to an uplink/downlink configuration currently used by the isolated cell and an uplink/downlink configuration that needs to be changed, determine how to change the uplink/downlink configuration of the isolated cell, and perform interference control for the isolated cell, which may reduce interference between different uplink/downlink configurations and implement interference coexistence between cells of different uplink/downlink configurations, so that the uplink/downlink configuration performed by the configuring module of the isolated cell for the uplink/downlink service is more reasonable and meets different uplink/downlink traffic requirements; therefore, a few spectrum resources are occupied and the cost is low.

FIG. 9 is a schematic diagram of an apparatus for configuring a radio network according to another example. As shown in FIG. 9, on the basis of the above embodiment, the apparatus for configuring a radio network may further include:
the sending module 31, further configured to send an uplink/downlink configuration currently used by the isolated cell to a user equipment UE served by the isolated cell and to neighboring cells, where the neighboring cells include the associated upper-layer cell of the isolated cell cluster and other isolated cells than an isolated cell initiating a request in the isolated cell cluster to which the isolated cell belongs.

Further, the apparatus for configuring a radio network may include:
a configuration obtaining module 35, configured to obtain and store configuration information of the associated upper-layer cell, where the configuration information of the associated upper-layer cell includes an initial associated upper-layer cell list;
an interference detecting module 36, connected to the configuration obtaining module 35 and configured to start interference detection for each associated upper-layer cell of the isolated cell cluster to which the isolated cell belongs; and
an associated upper-layer cell list updating module 37, connected to the interference detecting module 36 and configured to: if an interference detection result of one associated upper-layer cell is higher than a set threshold, store the associated upper-layer cell into the initial associated upper-layer cell list; or if an interference detection result of one associated upper-layer cell is lower than a set threshold, delete the associated upper-layer cell from the initial associated upper-layer cell list.

Further, the apparatus for configuring a radio network may include:
an isolated cell list updating module 38, connected to the interference detecting module 36 and configured to: if the configuration information of the associated upper-layer cell further includes an initial isolated cell list, instruct the associated upper-layer cell to update, according to an interference detection result of the isolated cell, an isolated cell list stored by the associated upper-layer cell; where the interference detecting module 36 may perform interference detection for the isolated cell, and the isolated cell list updating module 38 updates the stored isolated cell list according to the interference detection result of the isolated cell.

Further, the apparatus for configuring a radio network may include:
an update notifying module 39, connected to the associated upper-layer cell list updating module 38 and configured to: if the update of the associated upper-layer cell is detected, send configuration update information of the associated upper-layer cell to a network-side management node.

In this example, after an associated upper-layer cell receives a time division multiplexing configuration change request sent by the sending module of an isolated cell in an isolated cell cluster, the associated upper-layer cell may, according to an uplink/downlink configuration currently used by the isolated cell and an uplink/downlink configuration that needs to be changed, determine how to change the uplink/downlink configuration of the isolated cell, and perform interference control for the isolated cell, which may reduce interference between different uplink/downlink configurations and implement interference coexistence between cells of different uplink/downlink configurations, so that the uplink/downlink configuration performed by the configuring module of the isolated cell for the uplink/downlink service is more reasonable and meets different uplink/downlink traffic requirements; therefore, a few spectrum resources are occupied and the cost is low.

FIG. 10 is a schematic diagram of a system for configuring a radio network according to another example. As shown in FIG. 10, the system for configuring a radio network includes: an associated upper-layer cell 51 and an isolated cell cluster 53, where the isolated cell cluster 53 includes one or more cells providing local continuous coverage, and the number of associated upper-layer cells 51 immediately neighboring to the isolated cell cluster 53 is smaller than a set threshold; the associated upper-layer cell 51 may use the apparatus for configuring a radio network, where the apparatus has any of the structures provided by the examples corresponding to FIG. 5, FIG. 6, and FIG. 7; each isolated cell 531 of the isolated cell cluster 53 may use the apparatus for configuring a radio network, where the apparatus has any of the structures provided by the examples corresponding to FIG. 8 and FIG. 9.

In this example, after an associated upper-layer cell receives a time division multiplexing configuration change request sent by an isolated cell in an isolated cell cluster, the associated upper-layer cell may, according to an uplink/downlink configuration currently used by the isolated cell and an uplink/downlink configuration that needs to be changed, determine how to change the uplink/downlink configuration of the isolated cell, and perform interference control for the isolated cell, which may reduce interference between different uplink/downlink configurations and implement interference coexistence between cells of different uplink/downlink configurations, so that the uplink/downlink configuration of the isolated cell is more reasonable and meets different uplink/downlink traffic requirements; therefore, a few spectrum resources are occupied and the cost is low.

A person of ordinary skill in the art may understand that, all or a part of the steps of the foregoing method embodiments may be implemented by a program instructing relevant hardware. The program may be stored in a computer readable storage medium. When the program runs, the steps of the foregoing method embodiments are performed. The storage medium may be any medium that is capable of storing program codes, such as a ROM, a RAM, a magnetic disk or an optical disk.

Finally, it should be noted that the foregoing embodiments are merely intended for describing the technical solutions of the present invention other than limiting the present invention.

## Claims

1. A method for configuring a radio network performed by an upper layer cell, the method comprising:
receiving (101, 501), from an isolated cell in an isolated cell cluster, an uplink/downlink configuration that needs to be changed, wherein the isolated cell cluster comprises one or more cells providing local continuous coverage and the upper layer cell is associated to the isolated cell cluster;
determining (102, 502), according to an uplink/downlink configuration currently used by the isolated cell and the uplink/downlink configuration that needs to be changed, an uplink/downlink configuration to be used by the isolated cell, and performing interference control for the isolated cell; and
returning (103, 503) the uplink/downlink configuration to be used by the isolated cell to the isolated cell.

2. The method according to claim 1, wherein the method further comprises:
obtaining and storing configuration information of the isolated cell cluster within coverage of the upper-layer cell, wherein the configuration information of the isolated cell cluster comprises an isolated cell list configured in the isolated cell cluster;
starting interference detection (404) for each isolated cell of the isolated cell cluster; and
if an interference detection result of one isolated cell is lower than a set threshold, deleting (405) the isolated cell from the isolated cell list corresponding to the isolated cell cluster; if an interference detection result of one isolated cell is higher than a set threshold, storing (405) the isolated cell into the isolated cell list corresponding to the isolated cell cluster.

3. The method according to claim 2, wherein the method further comprises:
notifying configuration update information of the isolated cell cluster to the isolated cell; and/or
sending (406) the configuration update information of the isolated cell cluster to a network-side management node.

4. The method according to any one of claims 1 to 3, wherein the determining the uplink/downlink configuration to be used by the isolated cell comprises:
if resources of the associated upper-layer cell fully support the uplink/downlink configuration that needs to be changed, changing the uplink/downlink configuration used by the isolated cell into the uplink/downlink configuration that needs to be changed; or
if resources of the associated upper-layer cell partially support the uplink/downlink configuration that needs to be changed, selecting, according to the uplink/downlink configuration that needs to be changed and resources of the associated upper-layer cell, the uplink/downlink configuration to be used by the isolated cell; or
if resources of the associated upper-layer cell do not support the uplink/downlink configuration that needs to be changed, keeping the uplink/downlink configuration used by the isolated cell as the uplink/downlink configuration currently used by the isolated cell.

5. The method according to any one of claims 2 to 3, wherein the configuration information of the isolated cell cluster comprises an isolated cell indication and/or an associated upper-layer cell list, and the method further comprises:
determining, according to the isolated cell indication, whether a cell is an isolated cell; and/or
determining, according to the associated upper-layer cell list, an associated upper-layer cell immediately neighboring to a cell.

6. A method for configuring a radio network performed by an isolated cell in an isolated cell cluster, the method comprising:
determining (301), according to a current uplink/downlink service requirement, an uplink/downlink configuration that needs to be changed, and sending (501), to an associated upper-layer cell of the isolated cell cluster to which the isolated cell belongs, the uplink/downlink configuration that needs to be changed by the isolated cell, wherein the isolated cell cluster comprises one or more cells providing local continuous coverage; and
performing (302, 504) an uplink/downlink service configuration of the isolated cell according to an uplink/downlink configuration that is returned (503) by the associated upper-layer cell and to be used by the isolated cell.

7. The method according to claim 6, wherein after the performing the uplink/downlink service configuration of the isolated cell, the method comprises:
Sending (303) an uplink/downlink configuration currently used by the isolated cell to a user equipment UE served by the isolated cell and to neighboring cells, wherein the neighboring cells comprise the associated upper-layer cell of the isolated cell cluster and other isolated cells than an isolated cell initiating a request in the isolated cell cluster to which the isolated cell belongs.

8. The method according to claim 6 or 7, wherein the method further comprises:
obtaining (401) and storing configuration information of the associated upper-layer cell, wherein the configuration information of the associated upper-layer cell comprises a configured initial associated upper-layer cell list;
starting interference detection (402) for each associated upper-layer cell of the isolated cell cluster to which the isolated cell belongs; and
if an interference detection result of one associated upper-layer cell is higher than a set threshold, storing (402) the associated upper-layer cell into a configured associated upper-layer cell list;
if an interference detection result of one associated upper-layer cell is lower than a set threshold, deleting (402) the associated upper-layer cell from the initial associated upper-layer cell list.

9. The method according to claim 8, wherein the method further comprises:
if the configuration information of the associated upper-layer cell further comprises an inital isolated cell list, instructing the associated upper-layer cell to update, according to an interference detection result of the isolated cell, an isolated cell list stored by the associated upper-layer cell; and/or
if update of the associated upper-layer cell is detected, sending (403) configuration update information of the associated upper-layer cell to a network-side management node.

10. An upper layer cell configured to perform any of the methods according to claims 1 - 5.

11. An isolated cell configured to perform any of the methods according to claims 6 - 9.

## Patentansprüche

1. Verfahren zum Konfigurieren eines Funknetzwerks, das von einer Zelle einer oberen Schicht ("Upper-Layer"-Zelle) ausgeführt wird, wobei das Verfahren umfasst:
Empfangen (101, 501) einer zu ändernden Uplink-/Downlink-Konfiguration von einer isolierten Zelle in einem isolierten Zellencluster, wobei der isolierte Zellencluster eine oder mehrere Zellen aufweist, die einen lokalen kontinuierlichen Abdeckungsbereich vorsehen, und die "Upper-Layer"-Zelle dem isolierten Zellencluster zugeordnet wird;
Bestimmen (102, 502), gemäß einer von der isolierten Zelle aktuell verwendeten Uplink-/Downlink-Konfiguration und der zu ändernden Uplink-/Downlink-Konfiguration, einer von der isolierten Zelle zu verwendenden Uplink-/Downlink-Konfiguration und Durchführen einer Interferenzsteuerung für die isolierte Zelle; und
Zurückgeben (103, 503) der Uplink-/Downlink-Konfiguration, die von der isolierten Zelle zu verwenden ist, an die isolierte Zelle.

2. Verfahren nach Anspruch 1, wobei das Verfahren ferner umfasst:
Erhalten und Speichern von Konfigurationsinformationen des isolierten Zellenclusters innerhalb des Abdeckungsbereichs der "Upper-Layer"-Zellen, wobei die Konfigurationsinformationen des isolierten Zellenclusters eine isolierte Zellenliste beinhalten, die in dem isolierten Zellencluster konfiguriert ist;
Starten der Interferenzerkennung (404) für jede isolierte Zelle des isolierten Zellenclusters; und
wenn ein Interferenzerkennungsergebnis einer isolierten Zelle niedriger als ein eingestellter Schwellenwert ist, Entfernen (405) der isolierten Zelle aus der isolierten Zellenliste entsprechend dem isolierten Zellencluster; wenn ein Interferenzerkennungsergebnis einer isolierten Zelle höher als ein eingestellter Schwellenwert ist, Speichern (405) der isolierten Zelle in der isolierten Zellenliste entsprechend dem isolierten Zellencluster.

3. Verfahren nach Anspruch 2, wobei das Verfahren ferner umfasst:
Melden von Konfigurations-Aktualisierungsinformationen des isolierten Zellenclusters an die isolierte Zelle; und/oder
Senden (406) der Konfigurations-Aktualisierungsinformationen des isolierten Zellenclusters an einen netzwerkseitigen Verwaltungsknoten.

4. Verfahren nach einem der Ansprüche 1 bis 3, wobei das Bestimmen der von der isolierten Zelle zu verwendenden Uplink-/Downlink-Konfiguration umfasst:
wenn die Ressourcen der zugeordneten "Upper-Layer"-Zelle die zu ändernde Uplink-/Downlink-Konfiguration vollständig unterstützen, Ändern der von der isolierten Zelle verwendeten Uplink-/Downlink-Konfiguration in die zu ändernde Uplink-/Downlink-Konfiguration; oder
wenn Ressourcen der zugeordneten "Upper-Layer"-Zelle die zu ändernde Uplink-/Downlink-Konfiguration teilweise unterstützen, Auswählen der von der isolierten Zelle zu verwendenden Uplink-/Downlink-Konfiguration gemäß der zu ändernden Uplink-/Downlink-Konfiguration und den Ressourcen der zugeordneten "Upper-Layer"-Zelle; oder
wenn die Ressourcen der zugeordneten "Upper-Layer"-Zelle die zu ändernde Uplink-/Downlink-Konfiguration nicht unterstützen, Beibehalten der von der isolierten Zelle verwendeten Uplink-/Downlink-Konfiguration als die aktuell von der isolierten Zelle verwendete Uplink-/Downlink-Konfiguration.

5. Verfahren nach einem der Ansprüche 2 bis 3, wobei die Konfigurationsinformation des isolierten Zellenclusters eine isolierte Zellenanzeige und/oder eine zugeordnete "Upper-Layer"-Zellenliste enthalten und das Verfahren ferner umfasst:
Bestimmen, gemäß der Anzeige der isolierten Zelle, ob eine Zelle eine isolierte Zelle ist; und/oder
Bestimmen, gemäß der zugeordneten Zellenliste der oberen Schicht, einer zugeordneten "Upper-Layer"-Zelle, die einer Zelle unmittelbar benachbart ist.

6. Verfahren zum Konfigurieren eines Funknetzwerks, das von einer isolierten Zelle in einem isolierten Zellencluster durchgeführt wird, wobei das Verfahren umfasst:
Bestimmen (301), gemäß einer aktuellen Uplink-/Downlink-Dienstanforderung, einer zu ändernden Uplink-/Downlink-Konfiguration und Senden (501) der Uplink-/Downlink-Konfiguration, die durch die isolierte Zelle zu ändern ist, an eine zugeordnete obere Schicht des isolierten Zellenclusters, zu dem die isolierte Zelle gehört, wobei der isolierte Zellenblock eine oder mehrere Zellen umfasst, die einen lokalen kontinuierlichen Abdeckungsbereich vorsehen; und
Durchführen (302, 504) einer Uplink-/Downlink-Dienstkonfiguration der isolierten Zelle gemäß einer Uplink-/Downlink-Konfiguration, die von der zugeordneten "Upper-Layer"-Zelle zurückgegeben (503) und von der isolierten Zelle zu verwenden ist.

7. Verfahren nach Anspruch 6, wobei das Verfahren nach dem Durchführen der Uplink-/Downlink-Dienstkonfiguration der isolierten Zelle umfasst:
Senden (303) einer Uplink-/Downlink-Konfiguration, die aktuell von der isolierten Zelle verwendet wird, an eine Benutzereinrichtung (User Equipment, UE), die von der isolierten Zelle bedient wird, und an benachbarte Zellen, wobei die benachbarten Zellen die zugeordnete "Upper-Layer"-Zelle des isolierten Zellenclusters und andere isolierte Zellen als eine isolierte Zelle umfassen, die eine Anforderung in dem isolierten Zellencluster initiiert, zu dem die isolierte Zelle gehört.

8. Verfahren nach Anspruch 6 oder 7, wobei das Verfahren ferner umfasst:
Erhalten (401) und Speichern von Konfigurationsinformationen der zugeordneten "Upper-Layer"-Zellen, wobei die Konfigurationsinformationen der zugeordneten "Upper-Layer"-Zellen eine konfigurierte anfängliche zugeordnete "Upper-Layer"-Zellenliste beinhalten;
Starten der Interferenzerkennung (402) für jede zugeordnete "Upper-Layer"-Zelle des isolierten Zellenclusters, zu dem die isolierte Zelle gehört; und
wenn ein Interferenzerkennungsergebnis einer zugeordneten "Upper-Layer"-Zelle höher als ein eingestellter Schwellenwert ist, Speichern (402) der zugeordneten "Upper-Layer"-Zelle in einer konfigurierten zugeordneten "Upper-Layer"-Zellenliste;
wenn ein Interferenzerkennungsergebnis einer zugeordneten "Upper-Layer"-Zelle niedriger als ein festgelegter Schwellenwert ist, Entfernen (402) der zugeordneten "Upper-Layer"-Zelle aus der anfänglich zugeordneten "Upper-Layer"-Zellenliste.

9. Verfahren nach Anspruch 8, wobei das Verfahren ferner umfasst:
wenn die Konfigurationsinformationen der zugeordneten "Upper-Layer"-Zelle ferner eine anfängliche isolierte Zellenliste umfassen, Anweisen an die zugeordnete "Upper-Layer"-Zelle, gemäß einem Interferenzerkennungsergebnis der isolierten Zelle eine isolierte Zellenliste zu aktualisieren, die von der zugeordneten "Upper-Layer"-Zelle gespeichert ist; und/oder
wenn eine Aktualisierung der zugeordneten "Upper-Layer"-Zellen erkannt wird, Senden (403) von Konfigurations-Aktualisierungsinformationen der zugeordneten "Upper-Layer"-Zellen an einen netzwerkseitigen Verwaltungsknoten.

10. "Upper-Layer"-Zelle, die konfiguriert ist, um eines der Verfahren nach den Ansprüchen 1-5 durchzuführen.

11. Isolierte Zelle, die konfiguriert ist, um eines der Verfahren nach den Ansprüchen 6-9 durchzuführen.

## Revendications

1. Procédé de configuration d'un réseau radio exécuté par une cellule de couche supérieure, le procédé comprenant les étapes consistant à :
recevoir (101, 501), à partir d'une cellule isolée dans un groupe de cellules isolées, une configuration de liaison montante/descendante qui doit être modifiée, dans lequel le groupe de cellules isolées comprend une ou plusieurs cellules fournissant une couverture locale continue et la cellule de couche supérieure est associée au groupe de cellules isolées ;
déterminer (102, 502), en fonction d'une configuration de liaison montante/descendante actuellement utilisée par la cellule isolée et de la configuration de liaison montante/descendante qui doit être modifiée, une configuration de liaison montante/descendante à utiliser par la cellule isolée, et effectuer un contrôle d'interférence pour la cellule isolée ; et
renvoyer (103, 503) à la cellule isolée la configuration de liaison montante/descendante à utiliser par la cellule isolée.

2. Procédé selon la revendication 1, dans lequel le procédé comprend en outre les étapes consistant à :
obtenir et stocker des informations de configuration du groupe de cellules isolées dans la couverture de la cellule de couche supérieure, dans lequel les informations de configuration du groupe de cellules isolées comprennent une liste de cellules isolées configurée dans le groupe de cellules isolées ;
démarrer une détection d'interférence (404) pour chaque cellule isolée du groupe de cellules isolées ; et
si un résultat de détection d'interférence d'une cellule isolée est inférieur à un seuil défini, supprimer (405) la cellule isolée de la liste de cellules isolées correspondant au groupe de cellules isolées ; si un résultat de détection d'interférence d'une cellule isolée est supérieur à un seuil défini, enregistrer (405) la cellule isolée dans la liste de cellules isolées correspondant au groupe de cellules isolées.

3. Procédé selon la revendication 2, dans lequel le procédé comprend en outre les étapes consistant à :
notifier des informations de mise à jour de configuration du groupe de cellules isolées à la cellule isolée ; et/ou
envoyer (406) les informations de mise à jour de configuration du groupe de cellules isolées à un noeud de gestion côté réseau.

4. Procédé selon l'une quelconque des revendications 1 à 3, dans lequel la détermination de la configuration de liaison montante/descendante à utiliser par la cellule isolée comprend les étapes consistant à :
si des ressources de la cellule de couche supérieure associée prennent totalement en charge la configuration de liaison montante/descendante qui doit être modifiée, changer la configuration de liaison montante/descendante utilisée par la cellule isolée dans la configuration de liaison montante/descendante qui doit être modifiée ; ou
si des ressources de la cellule de couche supérieure associée prennent partiellement en charge la configuration de liaison montante/descendante qui doit être modifiée, sélectionner, en fonction de la configuration de liaison montante/descendante qui doit être modifiée et de ressources de la cellule de couche supérieure associée, la configuration de liaison montante/descendante à utiliser par la cellule isolée ; ou
si des ressources de la cellule de couche supérieure associée ne prennent pas en charge la configuration de liaison montante/descendante qui doit être modifiée, conserver la configuration de liaison montante/descendante utilisée par la cellule isolée en tant que configuration de liaison montante/descendante actuellement utilisée par la cellule isolée.

5. Procédé selon l'une quelconque des revendications 2 à 3, dans lequel les informations de configuration du groupe de cellules isolées comprennent une indication de cellule isolée et/ou une liste de cellules de couche supérieure associée, et le procédé comprend en outre les étapes consistant à :
déterminer, en fonction de l'indication de cellule isolée, si une cellule est une cellule isolée ; et/ou
déterminer, en fonction de la liste de cellules de couche supérieure associée, une cellule de couche supérieure associée immédiatement adjacente à une cellule.

6. Procédé de configuration d'un réseau radio exécuté par une cellule isolée dans un groupe de cellules isolées, le procédé comprenant les étapes consistant à :
déterminer (301), selon une exigence actuelle de service de liaison montante/descendante, une configuration de liaison montante/descendante qui doit être modifiée, et envoyer (501), à une cellule de couche supérieure associée du groupe de cellules isolées auquel appartient la cellule isolée, la configuration de liaison montante/descendante qui doit être modifiée par la cellule isolée, dans lequel le groupe de cellules isolées comprend une ou plusieurs cellules fournissant une couverture locale continue ; et
réaliser (302, 504) une configuration de service de liaison montante/descendante de la cellule isolée selon une configuration de liaison montante/descendante renvoyée (503) par la cellule de couche supérieure associée et à utiliser par la cellule isolée.

7. Procédé selon la revendication 6, dans lequel, après avoir réalisé la configuration de service de liaison montante/descendante de la cellule isolée, le procédé comprend l'étape consistant à :
envoyer (303) une configuration de liaison montante/descendante actuellement utilisée par la cellule isolée à un équipement d'utilisateur UE desservi par la cellule isolée et à des cellules adjacentes, dans lequel les cellules adjacentes comprennent la cellule de couche supérieure associée du groupe de cellules isolées et d'autres cellules isolées qu'une cellule isolée lançant une demande dans le groupe de cellules isolées auquel appartient la cellule isolée.

8. Procédé selon la revendication 6 ou 7, dans lequel le procédé comprend en outre les étapes consistant à :
obtenir (401) et stocker des informations de configuration de la cellule de couche supérieure associée, dans lequel les informations de configuration de la cellule de couche supérieure associée comprennent une liste de cellules de couche supérieure initiale associée configurée ;
démarrer une détection d'interférence (402) pour chaque cellule de couche supérieure associée du groupe de cellules isolées auquel appartient la cellule isolée ; et
si un résultat de détection d'interférence d'une cellule de couche supérieure associée est supérieur à un seuil défini, stocker (402) la cellule de couche supérieure associée dans une liste de cellules de couche supérieure associée configurée ;
si un résultat de détection d'interférence d'une cellule de couche supérieure associée est inférieur à un seuil défini, supprimer (402) la cellule de couche supérieure associée de la liste de cellules de couche supérieure initiale associée.

9. Procédé selon la revendication 8, dans lequel le procédé comprend en outre les étapes consistant à :
si les informations de configuration de la cellule de couche supérieure associée comprennent en outre une liste de cellules isolées initiale, ordonner à la cellule de couche supérieure associée de mettre à jour, en fonction d'un résultat de détection d'interférence de la cellule isolée, une liste de cellules isolées stockée par la cellule de couche supérieure associée ; et/ou
si une mise à jour de la cellule de couche supérieure associée est détectée, envoyer (403) des informations de mise à jour de configuration de la cellule de couche supérieure associée à un noeud de gestion côté réseau.

10. Cellule de couche supérieure configurée pour exécuter l'un quelconque des procédés selon les revendications 1 à 5.

11. Cellule isolée configurée pour exécuter l'un quelconque des procédés selon les revendications 6 à 9.
